# EUROPEAN PATENT APPLICATION

(11) **EP 4 447 566 A1**
(43) Date of publication of application: **16.10.2024**
(21) Application number: 21966846.4
(22) Date of filing: 10.12.2021
(51) Int. Cl.: H04W 56/00, H04L 67/12

(54) **SYNCHRONIZATION METHOD AND APPARATUS, AND DEVICE AND STORAGE MEDIUM**

(71) Applicant: Beijing Xiaomi Mobile Software Co., Ltd., Beijing 100085 (CN)
(72) Inventor: ZHU, Yajun, Beijing 100085 (CN)
(74) Representative: Gunzelmann, Rainer
(86) International application number: PCT/CN2021/137234
(87) International publication number: WO 2023/102928

(57) **Abstract**

The disclosure relates to the field of mobile communications. Disclosed are a synchronization method and apparatus, and a device and a storage medium. The method comprises: when an Internet-of-Things terminal is in a connected state, same receiving system information, which is sent by a network device, wherein the system information is used by the Internet-of-Things terminal to perform uplink synchronization; and performing uplink synchronization on the basis of the system information. The uplink synchronization is completed by means of the system information, such that the duration of uplink synchronization performed by the Internet-of-Things terminal can be prolonged, and a situation in which same fails to perform uplink synchronization due to a timer timing out is prevented, thus guaranteeing the reliability of uplink transmission.

## Description

### TECHNICAL FIELD

The present disclosure relates to but is not limited to the field of mobile communication technology, particularly to a synchronization method and a synchronization apparatus, a device, and a storage medium.

### BACKGROUND

In mobile communication technology, a distance between a terminal and a network device may cause that a certain duration is needed to transmit data between the terminal and the network device. The terminal sets a timer to ensure that uplink synchronization is achieved within a timing duration of the timer. However, if the timer expires, the terminal will be unable to achieve uplink synchronization, so a method for achieving uplink synchronization is urgently needed.

### SUMMARY

Embodiments of the present disclosure provides a synchronization method and a synchronization apparatus, a device, and a storage medium. The uplink synchronization completed via system information may extend a duration of Internet of Things (IoT) uplink synchronization, prevent a situation where the IoT terminal cannot achieve uplink synchronization due to a timer expiry and ensure the reliability of uplink transmission. The technical solution is as follows:

According to an aspect of the disclosure, a synchronization method is provided. The method is performed by an IoT terminal. The method includes: in case that the IoT terminal is in a connected state, receiving system information from a network device, in which the system information is configured for the IoT terminal to perform uplink synchronization; and performing uplink synchronization based on the system information.

According to an aspect of the disclosure, a synchronization method is provided. The method is performed by a network device. The method includes: in case that an IoT terminal is in a connected state, sending system information to the IoT terminal, in which the system information is configured for the IoT terminal to perform uplink synchronization.

According to an aspect of the disclosure, a synchronization apparatus is provided, including: a receiving module, configured to receive system information from a network device in case that an IoT terminal is in a connected state, in which the system information is configured for the IoT terminal to perform uplink synchronization; and a synchronization module, configured to perform uplink synchronization based on the system information.

According to an aspect of the disclosure, a synchronization apparatus is provided, including: a sending module, configured to send system information to an IoT terminal in case that the IoT terminal is in a connected state, in which the system information is configured for the IoT terminal to perform uplink synchronization.

According to an aspect of the disclosure, a terminal is provided, including: a processor; a transceiver connected to the processor; and a memory storing instructions executable by the processor. The processor is configured to load and execute the executable instructions to implement the method described in the above aspects.

According to an aspect of the disclosure, a network device is provided, including: a processor; a transceiver connected to the processor; and a memory storing instructions executable by the processor. The processor is configured to load and execute the executable instructions to implement the method described in the above aspects.

According to an aspect of the disclosure, a computer-readable storage medium is provided, in which an executable program code is stored. When the executable program code is loaded and executed by a processor, the method described in the above aspects is implemented.

According to an aspect of the disclosure, a chip is provided, including a programmable logic circuit and/or program instructions. When the chip is running on a terminal or a network device, the method described in the above aspects is implemented.

According to an aspect of the disclosure, an embodiment of the disclosure provides a computer program product. When the computer program product is executed by a processor of a terminal or a network device, the method described in the above aspects is implemented.

The technical solution according to the embodiments of the disclosure includes at least the following beneficial effects:

With the method, apparatus, device and storage medium provided in the embodiments of the disclosure, when the IoT terminal is in a connected state, it may still receive the system information from the network device for uplink synchronization. The uplink synchronization completed through the system information may extend a duration of the IoT uplink synchronization, prevent a situation where the IoT terminal cannot achieve uplink synchronization due to a timer expiry, and ensure the reliability of uplink transmission.

### BRIEF DESCRIPTION OF THE DRAWINGS

In order to more clearly illustrate the technical solutions in the embodiments of the disclosure, the drawings required for use in the description of the embodiments will be briefly introduced below. The drawings described below are only some embodiments of the disclosure. For those skilled in the art, other drawings may be obtained based on these drawings without paying any creative works.
FIG. 1 illustrates a block diagram of a communication system according to an example embodiment of the disclosure.
FIG. 2 illustrates a flowchart of a synchronization method according to an example embodiment of the disclosure.
FIG. 3 illustrates a flowchart of a synchronization method according to an example embodiment of the disclosure.
FIG. 4 illustrates a flowchart of a synchronization method according to an example embodiment of the disclosure.
FIG. 5 illustrates a flowchart of a synchronization method according to an example embodiment of the disclosure.
FIG. 6 illustrates a flowchart of a synchronization method according to an example embodiment of the disclosure.
FIG. 7 illustrates a block diagram of a synchronization apparatus according to an example embodiment of the disclosure.
FIG. 8 illustrates a block diagram of a synchronization apparatus according to an example embodiment of the disclosure.
FIG. 9 illustrates a block diagram of a synchronization apparatus according to an example embodiment of the disclosure.
FIG. 10 illustrates a block diagram of a synchronization apparatus according to an example embodiment of the disclosure.
FIG. 11 illustrates a structure diagram of a communication device according to an example embodiment of the disclosure.

### DETAILED DESCRIPTION

In order to make the objectives, technical solutions and advantages of the disclosure more clear, the implementations of the disclosure will be further described in detail below with reference to the accompanying drawings.

Example embodiments are described in detail here, examples of which are illustrated in the accompanying drawings. When the following description refers to the drawings, unless otherwise indicated, the same numbers in different drawings represent the same or similar elements. The implementations described in the following example embodiments do not represent all implementations consistent with the present disclosure. Rather, they are merely examples of apparatus and methods consistent with some aspects of the present disclosure as recited in the appended claims.

The terms used in the present disclosure are only for the purpose of describing specific embodiments and are not intended to limit the present disclosure. As used in the present disclosure and the appended claims, the singular forms "a," "an," and "the" are intended to include the plural forms as well, unless the context clearly indicates otherwise. It should also be understood that the term "and/or" used herein refers to and encompasses any and all possible combinations of one or more of the associated listed items.

It should be understood that although the terms first, second, third, etc. may be used to describe various information in the present disclosure, the information should not be limited to these terms. These terms are used only to distinguish information of the same type from one another. For example, without departing from the scope of the present disclosure, first information may also be referred to as second information, and similarly, second information may also be referred to as first information. The word "if" as used herein may be interpreted as "when" or "in case that" or "in response to determining," depending on the context.

The following is an explanation of application scenarios of the disclosure:

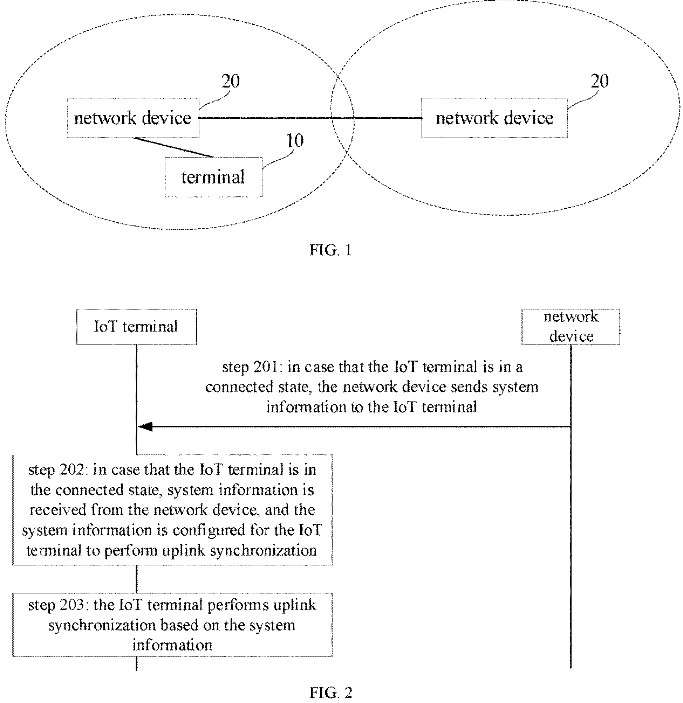

FIG. 1 illustrates a block diagram of a communication system according to an example embodiment of the disclosure. The communication system may include an IoT terminal 10 and a network device 20.

The number of IoT terminals 10 is usually multiple, and one or more IoT terminals 10 may be distributed in a cell managed by each network device 20. The IoT terminal 10 may include various handheld devices, vehicle-mounted devices, wearable devices, computing devices or other processing devices connected to a wireless modem, with wireless communication functions, as well as various forms of UE, mobile stations (MS), etc. For the convenience of description, in the embodiments of the disclosure, the above-mentioned devices are collectively referred to as terminals.

The network device 20 is a device deployed in an access network to provide wireless communication functions for the IoT terminal 10. The network device 20 may include various forms of macro base stations, micro base stations, relay stations, access points, etc. In systems using different wireless access technologies, the names of devices with network device functions may be different. For example, in 5G NR systems, they are called gNodeB or gNB. As the communication technology evolves, the name "network device" may change. For the convenience of description, the above-mentioned devices that provide wireless communication functions for the terminal 10 are collectively referred to as network devices in the embodiments of the disclosure. A connection may be established between the network device 20 and the IoT terminal 10 via a radio interface, so that communication may be performed via the connection, including signaling and data interaction. There may be a plurality of network devices 20, and two adjacent network devices 20 may communicate with each other via wired or wireless means. The IoT terminal 10 may switch between different network devices 20, that is, establish connections with different network devices 20.

The "5G NR system" in the embodiments of the disclosure may also be referred to as a 5G system or an NR system, but those skilled in the art may understand its meaning. The technical solutions described in the embodiments of the disclosure may be applied to a 5G NR system, and may also be applied to a subsequent evolution system of the 5G NR system.

FIG. 2 illustrates a flowchart of a synchronization method according to an example embodiment of the disclosure, which is applied to a terminal and a network device shown in FIG. 1, and the method includes at least part of the following steps.

At 201, in case that the IoT terminal is in a connected state, the network device sends system information to the IoT terminal.

In an embodiment of the disclosure, the IoT terminal needs to perform uplink synchronization, and a part of the system information used for uplink synchronization is sent by the network device.

The uplink synchronization refers to that data sent by the IoT terminal and data sent by other (IoT) terminal synchronously reach the network device within a allowable error range, so as to avoid interference between uplink transmissions of different terminals.

At 202, in case that the IoT terminal is in a connected state, system information is received from the network device, and the system information is configured for the IoT terminal to perform uplink synchronization.

In an embodiment of the disclosure, the IoT terminal is in a connected state. At this time, the IoT device may need to further perform uplink synchronization. Therefore, the IoT device receives system information from the network device when it is in a connected state, and the system information includes information configured for the IoT terminal to perform uplink synchronization.

At 203, the IoT terminal performs uplink synchronization based on the system information.

In an embodiment of the disclosure, after receiving the system information, the IoT terminal may perform uplink synchronization according to information included in the system information, to achieve synchronization with the information sent by other terminals to reach the network device, so as to prevent uplink multiple access interference and multipath interference between the terminals.

It should be noted that the steps performed by the IoT terminal may be implemented as a single step, and the steps performed by the network device may be implemented as a single step, which is not limited in the embodiments of the disclosure.

With the method in the embodiment of the disclosure, when the IoT terminal is in the connected state, it may still receive the system information from the network device for uplink synchronization. The uplink synchronization completed through the system information may extend a duration of the IoT uplink synchronization, prevent a situation where the IoT terminal cannot achieve uplink synchronization due to a timer expiry, and ensure the reliability of uplink transmission.

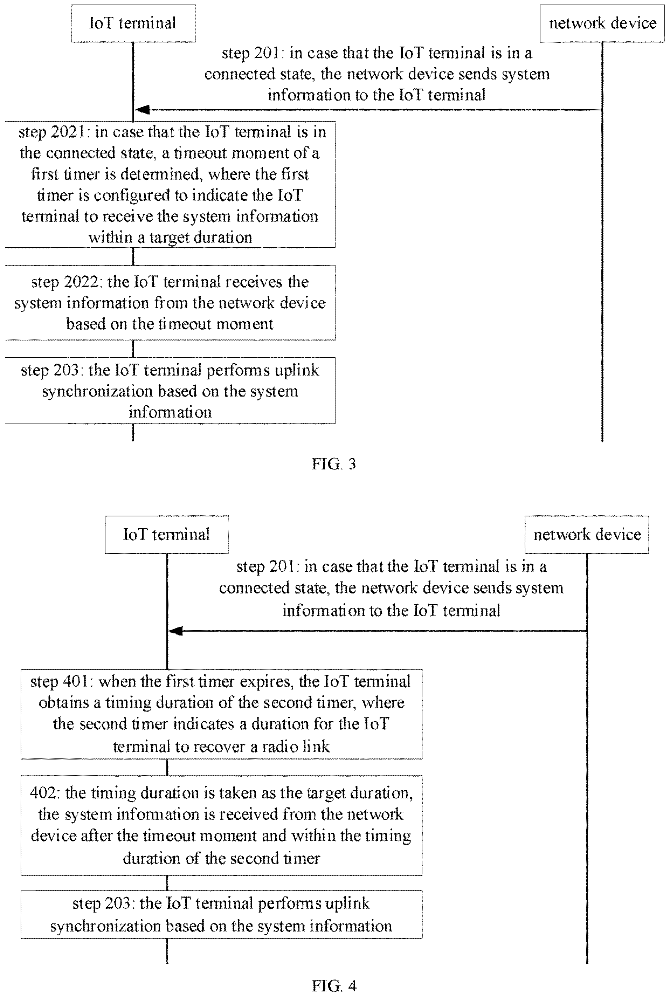

FIG. 2 illustrates that the IoT terminal receives the system information to perform uplink synchronization. Based on the embodiment shown in FIG. 2, the terminal receives the system information from the network device according to a timing moment of a first timer. The following describes this condition. Referring to FIG. 3, the method includes the following steps.

At 2021, in case that the IoT terminal is in the connected state, a timeout moment of a first timer is determined, where the first timer is configured to indicate the IoT terminal to receive the system information within a target duration.

In an embodiment of the disclosure, the IoT terminal may also start a first timer. After the first timer of the IoT terminal is started, if the first timer has passed a preset duration from its self-starting, the first timer may expire. At this time, the IoT terminal will be unable to perform uplink synchronization. Therefore, the IoT terminal needs to determine a timeout moment when the first timer expires, determine a target duration based on the timeout moment, and receive the system information from the network device within the preset duration.

In some embodiments, the target duration is configured by a network device, or by an IoT terminal, or in other ways, which is not limited in the embodiments of the disclosure. For example, the target duration is 10 milliseconds (ms), 20 ms or other values, which is not limited in the embodiments of the disclosure.

At 2022, the IoT terminal receives the system information from the network device based on the timeout moment.

In an embodiment of the disclosure, the IoT device determines a target duration for receiving the system information based on the timeout moment, and thus may receive the system information from the network device within the target duration based on the timeout moment.

If a transmission duration of the IoT terminal in the embodiment of the disclosure is long, the first timer will expire, and the expiry of the first timer may cause the IoT terminal to be unable to maintain uplink synchronization. Therefore, the IoT terminal may determine the timeout moment of the first timer, and then use the timeout moment as a reference to receive the system information sent by the network device, and subsequently perform uplink synchronization based on the system information to ensure that the IoT terminal achieves uplink synchronization.

With the method in the embodiment of the disclosure, when the IoT terminal is in the connected state, it may receive the system information from the network device based on the timeout moment of the first timer, so that the IoT terminal can perform uplink synchronization according to the system information, thus achieving that the IoT terminal can continue to achieve uplink synchronization when the first timer expires, extending a duration of the IoT terminal performing uplink synchronization, and ensuring the reliability of uplink transmission.

The embodiment shown in FIG. 2 illustrates that the IoT terminal receives the system information from the network device based on the timeout moment. Based on the embodiment shown in FIG. 2, the IoT device receives the system information from the network device before or after the timeout moment of the first timer.

In some embodiments, the IoT terminal receives the system information from the network device within a target duration before or after the timeout moment of the first timer.

In an embodiment of the disclosure, after the IoT terminal determines the timeout moment of the first timer, it may receive the system information from the network device within the target duration before the timeout moment of the first timer, and may perform uplink synchronization again based on the system information before the first timer expires, thus ensuring that the IoT terminal continues to achieve uplink synchronization.

In addition, after the IoT terminal determines the timeout moment of the first timer, it may also receive system information from the network device within the target duration after the timeout moment of the first timer, and after the first timer expires, the IoT terminal may perform uplink synchronization again based on the received system information, to ensure that the IoT terminal continues to achieve uplink synchronization.

It should be noted that, based on the above embodiments, since the IoT terminal may receive the system information before or after the timeout moment of the first timer, two situations are described below.

In the first situation, when the first timer expires, the IoT terminal triggers a radio link failure (RLF) process to receive system information, for details, see the embodiment shown in FIG. 4 below.

At 401, when the first timer expires, the IoT terminal obtains a timing duration of the second timer, where the second timer indicates a duration for the IoT terminal to recover a radio link.

In an embodiment of the disclosure, if the IoT terminal determines that the first timer has expired, the IoT terminal triggers the RLF, and since the duration for the IoT terminal to recover the radio link after the IoT terminal triggers the RLF is specified by the second timer, the IoT terminal obtains a timing duration of the second timer that specifies the duration after triggering the RLF.

At 402, the timing duration is taken as the target duration, the system information is received from the network device after the timeout moment and within the timing duration of the second timer.

In an embodiment of the disclosure, the timing duration obtained by the IoT terminal may indicate the duration of the second timer. Therefore, when the first timer expires, the IoT device takes the timing duration as the target duration, receives the system information from the network device after the timeout moment and within the timing duration of the second timer, performs uplink synchronization according to the system information, and recovers the communication connection with the network device.

Optionally, when the first timer expires, the IoT device takes the timing duration as the target duration, takes the timeout moment of the first timer as a start moment of the second timer, and receives system information from the network device within the timing duration of the second timer.

In some embodiments, the timing duration is agreed in a communication protocol, or the timing duration is configured by a network device.

If the timing duration is agreed in the communication protocol, when the IoT terminal determines that the first timer has expired, the predefined timing duration may be directly obtained.

If the timing duration is configured by a network device, the network device may send configuration information including the timing duration to the IoT terminal, and the IoT terminal may obtain the timing duration configured by the network device after receiving the configuration information.

Optionally, the configuration information from the network device may also include a start moment of the second timer. When the IoT terminal determines that the first timer has expired, it starts the second timer at the start moment and receives the system information within the timing duration of the second timer.

The start moment is the same as the timeout moment, or the start moment is different from the timeout moment.

Optionally, the network device may also only configure the start moment of the second timer through the configuration information. The IoT terminal obtains the start moment of the second timer through the configuration information, determines the timing duration of the second timer according to an agreement of the communication protocol, and subsequently starts the second timer at the start moment, and receives the system information within the timing duration of the second timer.

The IoT terminal may continue to receive the system information from the network device within the timing duration of the second timer. Alternatively, the IoT device may also receive the system information from the network device at some moment within the timing duration of the second timer.

In some embodiments, after the IoT device determines the timing duration of the second timer based on the timing duration, it receives the system information from the network device at a preset moment.

The preset moment belongs to a time period between the start moment of the second timer and the timeout moment of the second timer.

In an embodiment of the disclosure, within the timing duration of the second timer, the network device sends the system information to the IoT terminal at the timing moment, and the IoT terminal may receive the system information from the network device at the timing time. Since the IoT device does not need to always work within the timing duration of the second timer, the overhead of the IoT device is saved.

Optionally, the timing moment is configured by a network device, or is agreed in a communication protocol, or is determined by other methods, which is not limited in the embodiments of the disclosure.

In an embodiment of the disclosure, the network device determines a timing duration and sends the timing duration to an IoT terminal. After receiving the timing duration, the IoT device determines information of the second timer indicated by the timing duration, and receives the system information from the network device based on the timing duration of the second timer.

The network device also determines the timing duration of the second timer, and sends the system information to the IoT terminal within the target duration of the second timer indicated by the timing duration. The process that the network device determines the timing duration of the second timer is similar to the process of the above-mentioned IoT terminal, which will not be repeated here.

It should be noted that the embodiment of the disclosure is only described by taking as an example that the IoT terminal receives the system information, completes uplink synchronization, and may indicate the network device to recover the communication connection. In another embodiment, the IoT terminal may also be unable to receive the system information from the network device, and the IoT terminal switches to an RRC idle state.

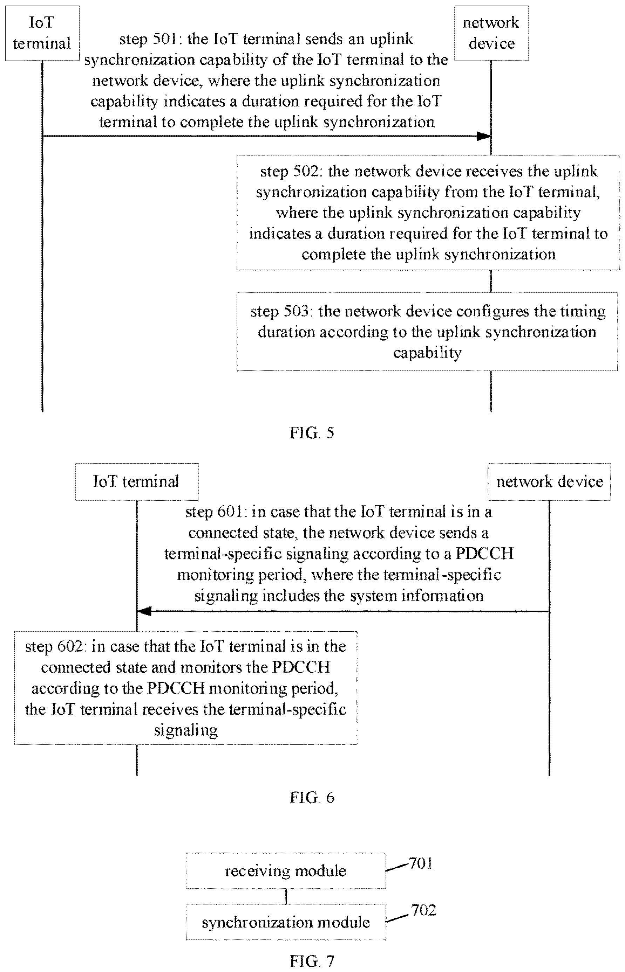

It should be noted that the embodiments of the disclosure are only described by taking as an example that the timing duration is configured by the network device. In another embodiment, the network device configures the timing duration according to an uplink synchronization capability reported by the IoT terminal, as shown in FIG. 5.

At 501, the IoT terminal sends an uplink synchronization capability of the IoT terminal to the network device, where the uplink synchronization capability indicates a duration required for the IoT terminal to complete the uplink synchronization.

In an embodiment of the disclosure, the first timer of the IoT terminal expires, and it is necessary to switch to triggering the RLF process to achieve uplink synchronization. The IoT terminal takes a certain duration for the IoT terminal to complete the uplink synchronization. Therefore, the network device may configure the timing duration according to the duration required for the IoT terminal to complete the uplink synchronization. The IoT terminal then sends its own uplink synchronization capability to the network device, and indicates the duration required to complete the uplink synchronization through the uplink synchronization capability.

In some embodiments, the uplink synchronization capability is represented by a number of first bits.

For example, the number of first bits is 2 bits, that is, the uplink synchronization capability is represented by 2 bits. Alternatively, the number of first bits is 3 bits, that is, the uplink synchronization capability is represented by 3 bits.

When the uplink synchronization capability is represented by 2 bits, the 2 bits may represent 4 types of uplink synchronization capabilities. For example, `00' indicates uplink synchronization capability 1, '01' indicates uplink synchronization capability 2, ` 10' indicates uplink synchronization capability 3, and '11' indicates uplink synchronization capability 4.

For example, a relationship between the two bits and the indicated uplink synchronization capability is shown in Table 1 .

**Table 1**

| 2 bits | uplink synchronization capability |
|---|---|
| 00 | uplink synchronization capability 1 |
| 01 | uplink synchronization capability 2 |
| 10 | uplink synchronization capability 3 |
| 11 | uplink synchronization capability 4 |

It should be noted that the embodiment of the disclosure is only described by taking as an example that the uplink synchronization capability indicates the duration required for the IoT terminal to perform uplink synchronization. In another embodiment, the uplink synchronization capability may also be directly the duration required for the IoT terminal to perform uplink synchronization. That is, the first bit directly indicates the duration required for the IoT terminal to perform uplink synchronization.

In some embodiments, the uplink synchronization capability of the IoT terminal is sent to the network device during the initial access phase.

In an embodiment of the disclosure, the IoT terminal needs to establish a connection with the network device through an initial access, and the IoT terminal may send an uplink synchronization capability to the network device during the initial access phase.

Optionally, the IoT terminal sends the uplink synchronization capability while sending the random access preamble code. Alternatively, the IoT terminal sends the uplink synchronization capability according to uplink resources indicated by the random access response returned by the network device.

In other embodiments, the IoT terminal sends the uplink synchronization capability of the IoT terminal to the network device after the radio resource control (RRC) connection is completed.

In an embodiment of the disclosure, after the IoT terminal completes the RRC connection, it means that the IoT terminal may communicate with the network device. At this time, the IoT terminal may send the uplink synchronization capability to the network device through the completed RRC connection.

In some embodiments, the timing duration is stored in the IoT terminal.

If the IoT terminal needs to determine how to receive the system information, when the first timer expires based on the timing duration, it may directly obtain the stored timing duration.

It should be noted that the embodiment of the disclosure is only described by taking as an example that the timing duration is stored in the IoT terminal. In another embodiment, the timing duration may also be agreed in a communication protocol, and the IoT terminal directly determines the timing duration according to an agreement of the communication protocol.

At 502, the network device receives the uplink synchronization capability from the IoT terminal, where the uplink synchronization capability indicates a duration required for the IoT terminal to complete the uplink synchronization.

At 503, the network device configures the timing duration according to the uplink synchronization capability.

In an embodiment of the disclosure, the network device may determine the duration required for the IoT terminal to complete the uplink synchronization based on the received uplink synchronization capability, configure the timing duration for the IoT terminal based on the determined duration required for the uplink synchronization, and subsequently send the system information to the IoT terminal according to the configured timing duration.

In some embodiments, the network device stores a correspondence between an uplink synchronization capability and a timing duration.

After the network device receives the uplink synchronization capability from the IoT terminal, it determines a corresponding timing duration according to the uplink synchronization capability, and configures the timing duration for the IoT terminal.

With the method in the embodiment of the disclosure, the IoT terminal reports its own uplink synchronization capability to the network device, and the network device may configure the timing duration based on the uplink synchronization capability, so that the terminal receives the system information based on the timing duration for uplink synchronization, which not only improves the accuracy of the timing duration configured by the network device, but also improves the accuracy of the IoT terminal receiving the system information, thus ensuring that the IoT terminal achieves uplink synchronization.

In the second situation, the IoT terminal receives a terminal-specific signaling including the system information before the first timer expires, see the following embodiment for details.

Within a target duration before the first timer expires, the IoT terminal receives the terminal-specific signaling, where the terminal-specific signaling includes the system information.

In an embodiment of the disclosure, the IoT terminal may continue to perform uplink synchronization before the first timer expires, so as to complete the uplink synchronization before the first timer expires. Therefore, the IoT terminal receives the terminal-specific signaling from the network device within the target duration before the timeout moment of the first timer.

In some embodiments, the target duration is agreed in a communication protocol, or configured by the network device, or configured in other ways, which is not limited in the embodiments of the disclosure.

In some embodiments, the system information in the embodiments of the disclosure is used for uplink synchronization of the IoT terminal. The IoT terminal may reset the first timer according to the system information so that the first timer may be re-timed, thus extending the duration of the IoT terminal performing the uplink synchronization and ensuring the reliability of uplink transmission of the IoT terminal.

In some embodiments, within the target duration, the IoT terminal suspends ongoing transmission and monitors physical downlink control channel (PDCCH), which is used to carry terminal-specific signaling or public/common information.

In an embodiment of the disclosure, if the IoT terminal determines that it needs to receive the terminal-specific signaling within the target duration before the timeout moment of the first timer, the IoT terminal needs to suspend the ongoing transmission so that the IoT terminal may monitor the PDCCH, and receive the terminal-specific signaling based on the monitored PDCCH.

It should be noted that the embodiments of the disclosure are only described by taking as an example that the terminal-specific signaling includes the system information. In another embodiment, the IoT terminal receives the system information before the first timer expires to obtain the system information for uplink synchronization.

In an embodiment of the disclosure, the IoT terminal receives the system information within a target duration before the first timer expires.

In an embodiment of the disclosure, the IoT terminal may continue to perform uplink synchronization before the first timer expires, so as to complete the uplink synchronization before the first timer expires. Therefore, the IoT terminal receives the system information from the network device within the target duration before the timeout moment of the first timer.

In some embodiments, the system information in the embodiments of the disclosure is used for uplink synchronization of the IoT terminal. The IoT terminal may reset the first timer according to the system information so that the first timer may be re-timed, thus extending the duration of the IoT terminal performing the uplink synchronization and ensuring the reliability of uplink transmission of the IoT terminal.

The above embodiment shown in FIG. 2 illustrates how the IoT terminal implements the uplink synchronization. Based on the embodiment shown in FIG. 2, referring to FIG. 6, how the IoT terminal receives the system information is described:

At 601, in case that the IoT terminal is in a connected state, the network device sends a terminal-specific signaling according to a PDCCH monitoring period, where the terminal-specific signaling includes the system information.

At 602, in case that the IoT terminal is in the connected state and monitors the PDCCH according to the PDCCH monitoring period, the IoT terminal receives the terminal-specific signaling.

In an embodiment of the disclosure, the network device may send the terminal-specific signaling according to the PDCCH monitoring period, and the IoT terminal may monitor the PDCCH according to the PDCCH monitoring period. Then, the IoT terminal may receive the terminal-specific signaling carried on the PDCCH, obtain the system information included in the terminal-specific signaling, and perform uplink synchronization according to the system information.

In some embodiments, the system information is used for the IoT terminal to perform uplink synchronization. The IoT terminal may reset the first timer according to the system information so that the first timer may be re-timed, thus extending the duration of the IoT terminal performing the uplink synchronization and ensuring the reliability of uplink transmission of the IoT terminal.

In some embodiments, the network device configures a PDCCH monitoring period for the IoT terminal, and the IoT terminal may determine the PDCCH monitoring period, and may periodically obtain the system information for uplink synchronization.

It should be noted that the embodiment of the disclosure is only described by taking as an example that the IoT terminal periodically receives the terminal-specific signaling to receive system information. In another embodiment, the IoT terminal may also periodically receive the system information without carrying the system information through the terminal-specific signaling.

In an embodiment of the disclosure, when the IoT terminal is in the connected state, the network device sends the system information according to the PDCCH monitoring period, and the IoT terminal receives the system information, when the IoT terminal is in the connected state and monitors the PDCCH according to the PDCCH monitoring period.

With the method in the embodiment of the disclosure, the IoT terminal periodically obtains the system information from the network device, and the IoT terminal may perform uplink synchronization according to the system information. Since the IoT terminal may periodically perform uplink synchronization, it is ensured that the IoT terminal may achieve uplink synchronization, asynchronism caused by the timer expiry of the IoT terminal is prevented, and the reliability of uplink transmission is thus improved.

It should be noted that the above-mentioned embodiments may be split into new embodiments, or combined with each other into new embodiments. The splitting or combining way is not limited in the disclosure.

FIG. 7 illustrates a block diagram of a synchronous reporting apparatus according to an example embodiment of the disclosure. Referring to FIG. 7, the apparatus includes a receiving module 701 and a synchronization module 702.

The receiving module 701 is configured to receive system information from a network device in case that the IoT terminal is in a connected state. The system information is configured for the IoT terminal to perform uplink synchronization.

The synchronization module 702 is configured to perform uplink synchronization based on the system information.

In some embodiments, the synchronization module 702 is further configured to determine a timeout moment of a first timer in case that the IoT terminal is in the connected state. The first timer is configured to indicate the IoT terminal to receive the system information within a target duration.

The receiving module 701 is configured to receive the system information from the network device based on the timeout moment.

In some embodiments, the receiving module 701 is further configured to receive the system information from the network device within a target duration before or after the timeout moment of the first timer.

In some embodiments, the receiving module 701 is further configured to:

in case that the first timer expires, obtain a timing duration of a second timer, wherein the second timer indicates a duration for the IoT terminal to recover a radio link;

take the timing duration as the target duration, and receive the system information from the network device after the timeout moment and within the timing duration of the second timer.

In some embodiments, the timing duration is agreed in a communication protocol, or the timing duration is configured by the network device.

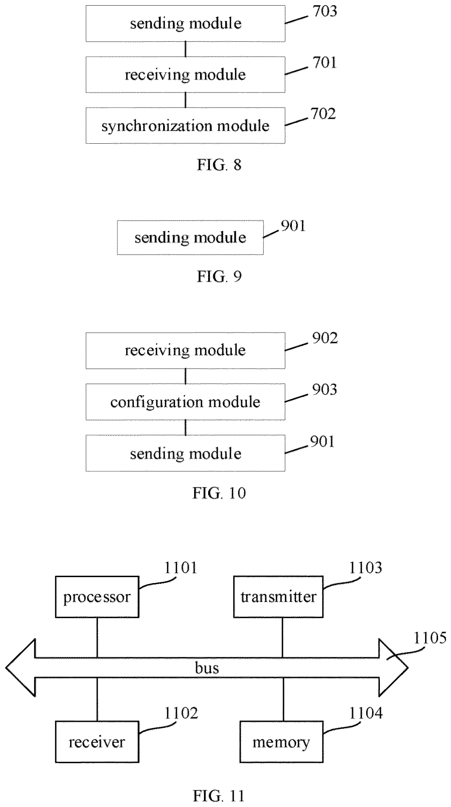

In some embodiments, referring to FIG. 8, the apparatus further includes: a sending module 703, configured to send an uplink synchronization capability of the IoT terminal to the network device. The uplink synchronization capability indicates a duration required for the IoT terminal to complete the uplink synchronization. The network device configures the timing duration according to the uplink synchronization capability.

In some embodiments, the sending module 703 is further configured to: send the uplink synchronization capability of the IoT terminal to the network device during an initial access phase; or send the uplink synchronization capability of the IoT terminal to the network device after an RRC connection is completed

In some embodiments, the uplink synchronization capability is represented by a number of first bits.

In some embodiments, the timing duration is stored in the IoT terminal.

In some embodiments, the receiving module 701 is configured to receive a terminal-specific signaling within the target duration before the timeout moment of the first timer, in which the terminal-specific signaling includes the system information.

In some embodiments, the receiving module 701 is configured to suspend by the IoT terminal ongoing transmission and monitoring a PDCCH during the target duration, in which the terminal-specific signaling is carried on the PDCCH.

In some embodiments, the receiving module 701 is further configured to: in case that the IoT terminal is in the connected state and monitors the PDCCH according to a PDCCH monitoring period, receive a terminal-specific signaling, in which the terminal-specific signaling includes the system information.

It should be noted that for the apparatus in the above embodiment, when its functions are implemented, only the division of the above-mentioned functional modules is used as an example. In actual applications, the above-mentioned functions may be assigned to different functional modules as needed, that is, the internal structure of the apparatus may be divided into different functional modules to complete all or part of the functions described above. In addition, the apparatus and method embodiments in the above embodiments belong to the same concept, and their specific implementation processes are detailed in the method embodiments, which will not be repeated here.

FIG. 9 illustrates a block diagram of a synchronous receiving apparatus according to an example embodiment of the disclosure. Referring to FIG. 9, the apparatus includes: a sending module 901, configured to send system information to an IoT terminal, in case that the IoT terminal is in a connected state. The system information is configured for the IoT terminal to perform uplink synchronization.

In some embodiments, the sending module 901 is further configured to: in case that the IoT terminal is in the connected state, determine a timeout moment of a first timer, in which the first timer is configured to indicate the IoT terminal to receive the system information within a target duration; and send the system information to the IoT terminal based on the timeout moment.

In some embodiments, the sending module 901 is further configured to: send the system information to the IoT terminal within a target duration before or after the timeout moment of the first timer.

In some embodiments, the sending module 901 is further configured to: in case that the first timer expires, obtain a timing duration of a second timer, wherein the second timer indicates a duration for the IoT terminal to recover a radio link; and take the timing duration as the target duration, and send the system information to the IoT terminal after the timeout moment and within the timing duration of the second timer.

In some embodiments, the timing duration is agreed in a communication protocol, or the timing duration is configured by the network device.

In some embodiments, referring to FIG. 10, the apparatus further includes a receiving module 902 and a configuration module 903.

The receiving module 902 is configured to receive an uplink synchronization capability from the IoT terminal, in which the uplink synchronization capability indicates a duration required for the IoT terminal to complete the uplink synchronization;

The configuration module 903 is configured to configure the timing duration according to the uplink synchronization capability.

In some embodiments, the sending module 901 is further configured to: receive the uplink synchronization capability from the IoT terminal during an initial access phase; or receive the uplink synchronization capability from the IoT terminal after an RRC connection is completed.

In some embodiments, the uplink synchronization capability is represented by a number of first bits.

In some embodiments, the timing duration is stored in the network device.

In some embodiments, the sending module 901 is further configured to send a terminal-specific signaling within the target duration before the timeout moment of the first timer, in which the terminal-specific signaling includes the system information.

In some embodiments, the sending module 901 is further configured to send a terminal-specific signaling according to a PDCCH monitoring period in case that the IoT terminal is in the connected state, in which the terminal-specific signaling includes the system information.

It should be noted that for the apparatus in the above embodiment, when its functions are implemented, only the division of the above-mentioned functional modules is used as an example. In actual applications, the above-mentioned functions may be assigned to different functional modules as needed, that is, the internal structure of the apparatus may be divided into different functional modules to complete all or part of the functions described above. In addition, the apparatus and method embodiments in the above embodiments belong to the same concept, and their specific implementation processes are detailed in the method embodiments, which will not be repeated here.

FIG. 11 illustrates a structure diagram of a communication device according to an example embodiment of the disclosure. The communication device includes: a processor 1101, a receiver 1102, a transmitter 1103, a memory 1104 and a bus 1105.

The processor 1101 includes one or more processing cores. The processor 1101 executes various functional applications and information processing by running software programs and modules.

The receiver 1102 and the transmitter 1103 may be implemented as a communication component, which may be one communication chip.

The memory 1104 is connected to the processor 1101 via the bus 1105.

The memory 1104 may be used to store at least one program code, and the processor 1101 may be used to execute the at least one program code to implement each step in the above method embodiment.

Furthermore, the communication device may be a terminal or a network device. The memory 1104 may be implemented by any type of volatile or non-volatile storage device or their combination. The volatile or non-volatile storage devices include but are not limited to: magnetic disks or optical disks, an electrically erasable programmable read-only memory (EEPROM), an erasable programmable read-only memory (EPROM), a static random access memory (SRAM), a read-only memory (ROM), a magnetic memory, a flash memory, and a programmable read-only memory (PROM).

In an example embodiment, a computer-readable storage medium is further provided. An executable program code is stored in the computer-readable storage medium, and the executable program code is loaded and executed by a processor to implement the methods executed by a communication device according to the above-mentioned various method embodiments.

In an example embodiment, a chip is provided. The chip includes a programmable logic circuit and/or program instructions. When the chip is running on a terminal or a network device, it is used to implement the methods in various method embodiments.

In an example embodiment, a computer program product is provided. When the computer program product is executed by a processor of a terminal or a network device, it is used to implement the methods in the above-mentioned various method embodiments.

Those skilled in the art may understand that all or part of the steps to implement the above embodiments may be accomplished in hardware or by instructing related hardware through a program, and the program may be stored in a computer-readable storage medium. The above-mentioned storage medium may be a read-only memory, a disk or an optical disk, etc.

The above description is only an optional embodiment of the disclosure and is not intended to limit the disclosure. Any modifications, equivalent substitutions, improvements, etc. made within the spirit and principles of the disclosure shall be included in the protection scope of the disclosure.

## Claims

1. A synchronization method, performed by an Internet of Things (IoT) terminal, comprising:
in case that the IoT terminal is in a connected state, receiving system information from a network device, wherein the system information is configured for the IoT terminal to perform uplink synchronization; and
performing uplink synchronization based on the system information.

2. The method according to claim 1, wherein in case that the IoT terminal is in the connected state, receiving the system information from the network device comprises:
in case that the IoT terminal is in the connected state, determining a timeout moment of a first timer, wherein the first timer is configured to indicate the IoT terminal to receive the system information within a target duration; and
receiving the system information from the network device based on the timeout moment.

3. The method according to claim 2, wherein receiving the system information from the network device based on the timeout moment comprises:
receiving the system information from the network device within a target duration before or after the timeout moment of the first timer.

4. The method according to claim 3, wherein receiving the system information from the network device within the target duration before or after the timeout moment of the first timer comprises:
in case that the first timer expires, obtaining a timing duration of a second timer, wherein the second timer indicates a duration for the IoT terminal to recover a radio link; and
taking the timing duration as the target duration, and receiving the system information from the network device after the timeout moment and within the timing duration of the second timer.

5. The method according to claim 4, wherein the timing duration is agreed in a communication protocol, or the timing duration is configured by the network device.

6. The method according to claim 5, further comprising:
sending an uplink synchronization capability of the IoT terminal to the network device, wherein the uplink synchronization capability indicates a duration required for the IoT terminal to complete the uplink synchronization;
wherein the network device configures the timing duration according to the uplink synchronization capability.

7. The method according to claim 6, wherein sending the uplink synchronization capability of the IoT terminal to the network device comprises:
sending the uplink synchronization capability of the IoT terminal to the network device during an initial access phase; or
sending the uplink synchronization capability of the IoT terminal to the network device after a radio resource control (RRC) connection is completed.

8. The method according to claim 6, wherein the uplink synchronization capability is represented by a number of first bits.

9. The method according to any one of claims 4 to 8, wherein the timing duration is stored in the IoT terminal.

10. The method according to claim 3, wherein receiving the system information from the network device within the target duration before the timeout moment of the first timer comprises:
receiving a terminal-specific signaling within the target duration before the timeout moment of the first timer, wherein the terminal-specific signaling comprises the system information.

11. The method according to claim 10, further comprising:
suspending by the IoT terminal ongoing transmission and monitoring a physical downlink control channel (PDCCH) during the target duration, wherein the terminal-specific signaling is carried on the PDCCH.

12. The method according to claim 1, wherein in case that the IoT terminal is in the connected state, receiving the system information from the network device comprises:
in case that the IoT terminal is in the connected state and monitors the PDCCH according to a PDCCH monitoring period, receiving a terminal-specific signaling, wherein the terminal-specific signaling comprises the system information.

13. A synchronization method, performed by a network device, comprising:
in case that an Internet of Things (IoT) terminal is in a connected state, sending system information to the IoT terminal, wherein the system information is configured for the IoT terminal to perform uplink synchronization.

14. The method according to claim 13, wherein in case that the IoT terminal is in the connected state, sending the system information to the IoT terminal comprises:
in case that the IoT terminal is in the connected state, determining a timeout moment of a first timer, wherein the first timer is configured to indicate the IoT terminal to receive the system information within a target duration; and
sending the system information to the IoT terminal based on the timeout moment.

15. The method according to claim 14, wherein sending the system information to the IoT terminal based on the timeout moment comprises:
sending the system information to the IoT terminal within a target duration before or after the timeout moment of the first timer.

16. The method according to claim 15, wherein sending the system information to the IoT terminal within the target duration after the timeout moment of the first timer comprises:
in case that the first timer expires, obtaining a timing duration of a second timer, wherein the second timer indicates a duration for the IoT terminal to recover a radio link; and
taking the timing duration as the target duration, and sending the system information to the IoT terminal after the timeout moment and within the timing duration of the second timer.

17. The method according to claim 16, wherein the timing duration is agreed in a communication protocol, or the timing duration is configured by the network device.

18. The method according to claim 17, further comprising:
receiving an uplink synchronization capability from the IoT terminal, wherein the uplink synchronization capability indicates a duration required for the IoT terminal to complete the uplink synchronization; and
configuring the timing duration according to the uplink synchronization capability.

19. The method according to claim 18, wherein receiving the uplink synchronization capability from the IoT terminal comprises:
receiving the uplink synchronization capability from the IoT terminal during an initial access phase; or
receiving the uplink synchronization capability from the IoT terminal after a radio resource control (RRC) connection is completed.

20. The method according to claim 19, wherein the uplink synchronization capability is represented by a number of first bits.

21. The method according to any one of claims 16 to 20, wherein the timing duration is stored in the network device.

22. The method according to claim 15, wherein sending the system information to the IoT terminal within the target duration after the timeout moment of the first timer comprises:
sending a terminal-specific signaling within the target duration before the timeout moment of the first timer, wherein the terminal-specific signaling comprises the system information.

23. The method according to claim 13, wherein in case that the IoT terminal is in the connected state, sending the system information to the IoT terminal comprises:
in case that the IoT terminal is in the connected state, sending a terminal-specific signaling according to a PDCCH monitoring period, wherein the terminal-specific signaling comprises the system information.

24. A synchronization apparatus, comprising:
a receiving module, configured to receive system information from a network device in case that an Internet of Things (IoT) terminal is in a connected state, wherein the system information is configured for the IoT terminal to perform uplink synchronization; and
a synchronization module, configured to perform uplink synchronization based on the system information.

25. A synchronization apparatus, comprising:
a sending module, configured to send system information to an Internet of Things (IoT) terminal in case that the IoT terminal is in a connected state, wherein the system information is configured for the IoT terminal to perform uplink synchronization.

26. A terminal, comprising:
a processor;
a transceiver connected to the processor;
wherein the processor is configured to load and execute executable instructions to implement the method according to any one of claims 1 to 12.

27. A network device, comprising:
a processor; and
a transceiver connected to the processor;
wherein the processor is configured to load and execute executable instructions to implement the method according to any one of claims 13 to 23.

28. A computer-readable storage medium storing an executable program code, wherein when the executable program code is loaded and executed by a processor, the method according to any one of claims 1 to 23 is implemented.

29. A computer program product, wherein when the computer program product is executed by a processor of a terminal or a network device, the method according to any one of claims 1 to 23 is implemented.
